# EUROPÄISCHE PATENTSCHRIFT

(11) **EP 1 190 212 B1**
(45) Veröffentlichungstag und Bekanntmachung des Hinweises auf die Patenterteilung: **18.11.2015**
(21) Anmeldenummer: 01919328.3
(22) Anmeldetag: 22.02.2001
(51) Int. Cl.: G01B 11/24, G01B 11/02

(54) **VORRICHTUNG ZUR OPTO-ELEKTRONISCHEN BESTIMMUNG DER LÄNGE UND/ODER DER BREITE EINES AUF EINER UNTERLAGE AUFLIEGENDEN KÖRPERS**
DEVICE FOR OPTOELECTRONIC DETERMINATION OF THE LENGTH AND/OR WIDTH OF A BODY SITUATED ON A SUPPORT
DISPOSITIF OPTO-ELECTRONIQUE PERMETTANT DE DETERMINER LA LONGUEUR ET/OU LA LARGEUR D'UN CORPS REPOSANT SUR UN SUPPORT

(30) Priorität: 03.03.2000 DE 10010136
(43) Veröffentlichungstag der Anmeldung: 27.03.2002
(73) Patentinhaber: Dosenbach-Ochsner AG Schuhe und Sport, 8953 Dietikon (CH)
(72) Erfinder: GERHARD, Edmund, 47803 Krefeld (DE); VIGA, Reinhard, 47839 Krefeld (DE)
(74) Vertreter: Sparing Röhl Henseler
(86) Internationale Anmeldenummer: PCT/EP2001/002039
(87) Internationale Veröffentlichungsnummer: WO 2001/065205

(56) Entgegenhaltungen:
- EP-A- 0 214 954
- EP-A1- 0 014 022
- DE-U- 8 308 980
- US-A- 3 930 150
- PATENT ABSTRACTS OF JAPAN vol. 016, no. 040 (C-0906), 31. Januar 1992 (1992-01-31) & JP 03 247305 A (TOYO TIRE & RUBBER CO LTD), 5. November 1991 (1991-11-05)

## Beschreibung

### Technisches Gebiet

Die Erfindung betrifft eine Vorrichtung zur Bestimmung der Länge und der Breite der beiden auf einer Unterlage aufliegenden Füße eines Menschen nach dem Oberbegriff des Anspruchs 1.

Die Vorrichtung ist dazu bestimmt, die Länge und die Breite der Füße und dadurch die richtige Schuhgröße zu bestimmen.

### Stand der Technik

Aus DE 83 08 980 U1 ist ein Fußmeßgerät mit sechs Lichtschranken bekannt, bei dem die Lichtschranken an um Umlenkrollen geführten Zahnriemen vorschubbeweglich angeordnet sind.

Aus EP 0 214 954 A2 ist eine Messvorrichtung zur berührungslosen Bestimmung von Massen nach dem Schattenbildverfahren unter Verwendung eines in Teilstrahlen aufgespaltenen Laserstrahls bekannt.

Aus EP 0 014 022 A1 ist eine Vorrichtung bekannt zur Ermittlung der Größe eines Fußes, bei der längliche Lampen verwendet werden, die sich über die gesamte Länge einer zu bestimmenden Länge bzw. Breite erstrecken.

Eine Vorrichtung, beispielsweise zur Bestimmung der Länge von Kinderfüßen, ist allgemein bekannt und basiert auf einer rein mechanischen Vermessung der Füße. Die vorbekannte Vorrichtung weist Anschlagleisten auf, die zur Bestimmung der Länge der Füße von vom gegen die Zehen und/oder zur Bestimmung der Weite seitlich gegen die zuvor fixierten Füße geschoben werden. Durch die Berührung der Füße durch die Anschlagleisten ist von Nachteil, dass sich die Füße beispielsweise reflexartig verlagern oder ein Einziehen der Zehen erfolgt, was zu einer Fehlmessung führen kann; die gemessene Fußlänge wäre dann kürzer, als die tatsächliche Fußlänge. Um ein genaues Messergebnis zu erzielen, ist es deshalb erforderlich, Mehrfachmessungen durchzuführen, was für alle an der Messung Beteiligten wenig zufriedenstellend ist. Ferner besteht allgemein die Gefahr von Ablesefehlem durch das Bedienpersonal der Vorrichtung, was bei Verwendung von Vorrichtungen zur Bestimmung der Länge eines menschlichen Fußes in Anbetracht der kleinen Stufungen in den Fuß-/Schuhgrößen-Maßsystemen zur Zuordnung einer falschen Schuhgröße führen kann.

### Darstellung der Erfindung

Der Erfindung liegt die Aufgabe zugrunde, eine Vorrichtung zur Bestimmung der Länge und der Breite der beiden auf einer Unterlage aufliegenden Füße eines Menschen zu schaffen, bei der eine gute Messgenauigkeit bei einfachem, kostengünstigem Aufbau gegeben ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Vorrichtung zur opto-elektronischen Bestimmung der Länge und der Breite der beiden auf einer Unterlage aufliegenden Füße eines Menschen vorgesehen, umfassend eine erste Linearführung zur Bestimmung der Länge und eine zweite Linearführung zur Bestimmung der Breite der Füße, wobei die erste und die zweite Linearführung entlang der Längs- bzw. Querrichtung der Unterlage beweglich sind, wobei die Linearführungen jeweils zumindest einen opto-elektronischen Tastkopf aufweisen und wobei die Tastköpfe signalleitend mit einer Auswertevorrichtung zur Umrechnung und Anzeige des von den Tastköpfen abgegebenen elektrischen Signals in die Länge und die Breite der Füße verbunden sind. Durch eine solche Vorrichtung werden die zu vermessenden Füße nur im Bereich ihrer Auflagefläche von der Unterlage berührt. Die Bestimmung der Länge und Breite wird durch eine optische Vermessung vorgenommen. Die Vorrichtung weist durch die Verwendung von Linearführungen einen vergleichsweise einfachen Aufbau auf und ist kostengünstig herstellbar. Außerdem ist von Vorteil, dass die Vorrichtung kompakte Abmessungen aufweist. Die Abmessungen sind nur unwesentlich grösser als die Unterlage selbst, auf der sich die zu vermessenden Füße befinden. Die Auswertevorrichtung kann räumlich von der Unterlage und den Linearführungen getrennt sein. Die von den Tastköpfen an die Auswertevorrichtung abgegebenen Signale werden durch die Auswertevorrichtung in ein beliebiges Maßsystem gewandelt und über eine Schnittstelle auf einem Peripheriegerät, beispielsweise auf einem Monitor, angezeigt und/oder ausgegeben. Für die Bestimmung der Länge und der Breite von Füßen ist eine solche Vorrichtung von hervorzuhebendem Vorteil, da es Anschlagleisten, die die Füße unmittelbar anliegend berühren, nicht mehr bedarf. Auch die Gefahr von Ablesefehlern durch das Bedienpersonal ist durch die Auswertevorrichtung und die Anzeige, auf der die Abmessungen der Füße beispielsweise in Millimetern oder die Schuhgröße direkt abgelesen werden kann, auf ein Minimum reduziert.

Verunreinigungen der Unterlage, beispielsweise mit Hausstaub, haben keinen negativen Einfluss auf das Messergebnis. Die beanspruchte Vorrichtung weist daher sowohl eine ausgezeichnete Zuverlässigkeit als auch eine hohe Messgenauigkeit auf.

Die Vorrichtung ist zur Bestimmung der Länge und der Breite der beiden auf einer Unterlage aufliegenden Füße vorgesehen, und die Linearführungen zur Bestimmung der Länge und der Breite sind orthogonal zueinander angeordnet. Zur Erzielung eines genauen Messergebnisses ist es bevorzugt vorgesehen, dass die Unterlage mit den Linearführungen verbunden ist und dass die Unterlage und die Linearführungen unverrückbar zueinander positioniert sind. Da die Vorrichtung insgesamt kompakte Abmessungen aufweist und dadurch leicht zu transportieren ist, ist eine solche Ausgestaltung im Hinblick auf eine gute Messgenauigkeit von hervorzuhebendem Vorteil. Die Unterlage und die Linearführungen bilden eine Einheit, wobei die Einheit lediglich an die Auswertevorrichtung anzuschließen ist. Die Handhabung ist dadurch wesentlich vereinfacht. Eine Justierung der Linearführungen bezogen auf die Unterlage ist im Anschluss an die Herstellung der Vorrichtung nicht mehr erforderlich.

Die Tastköpfe sind als Lichtschranken ausgebildet und weisen jeweils zumindest einen Emitter und zumindest einen dem Emitter funktionstechnisch zugeordneten Detektor auf. Lichtschranken arbeiten während einer langen Gebrauchsdauer zuverlässig und wartungsfrei, was speziell im Hinblick auf ein technisch wenig versiertes Bedienpersonal von Vorteil ist.

Die Linearführungen sind bevorzugt jeweils im wesentlichen U-förmig ausgebildet und untergreifen die Unterlage mit einem Verbindungssteg, wobei die Schenkel der Linearführungen auf einander gegenüberliegenden Seiten der Füße angeordnet sind und wobei einer der Schenkel einen Emitter und einer der Schenkel einer jeden Linearführung einen Detektor aufweist. Durch den Verbindungssteg werden die Emitter und die Detektoren einer jeden Linearführung synchron bewegt.

Die Messstrahlen der Emitter einer jeden Linearführung werden moduliert und detektorseitig gefiltert sowie einer Schwellwertgewichtung unterzogen, um Funktionsstörungen, beispielsweise durch Fremdlicht, zu vermeiden. Die Erfassung, Merkmalsextraktion und -speicherung der auf diese Weise digitalisierten Detektorsignale kann bei laufender Tastkopfbewegung programmgesteuert erfolgen. Die Auswertung der Signale erfolgt beispielsweise nach Abschluss der Messfahrt ohne zeitliche Limitierung.

Die Linearführungen können jeweils durch einen Schrittschaltmotor antreibbar sein. Das Grundprinzip der Auswertung basiert auf der festen Relation zwischen der Vortriebsschrittzahl und der jeweiligen Tastkopfposition, so dass durch Zählen der Motorschritte zwischen zwei Flankenwechseln der Detektorsignale eine eindeutige Längenzuordnung gegeben ist. Als Signalflanke bezeichnet man den Übergang eines Signalpegels (Spannungswert) von einem Pegelwert zu einem anderen Pegelwert, wobei der Übergang von einem niedrigeren Pegelwert zu einem höheren Pegelwert als steigende Flanke und der Übergang von einem höheren Pegelwert zu einem niedrigeren Pegelwert als fallende Flanke bezeichnet wird.

Die Linearführungen werden beispielsweise in äquidistanten Schritten oder mit konstanter Geschwindigkeit bewegt.

Die Auswertevorrichtung kann durch ein elektronisches Modul gebildet sein und beispielsweise eine Klassifizierungseinrichtung zur Umformung des zumindest einen Messignals in eine Größenklassifizierung umfassen. Eine solche Auswertevorrichtung ist insbesondere dann sinnvoll, wenn die Vorrichtung zur Bestimmung der Größe von Füßen eines Menschen zur Anwendung gelangt.

### Kurzbeschreibung der Zeichnung

Ein Ausführungsbeispiel der erfindungsgemäßen Vorrichtung wird nachfolgend anhand der schematisch dargestellten Figuren näher beschrieben. Diese zeigen:
Figur 1 eine perspektivische Ansicht der Vorrichtung.
Figur 2 eine Seitenansicht der Vorrichtung und
Figur 3 eine Draufsicht auf die Vorrichtung.

### Ausführung der Erfindung

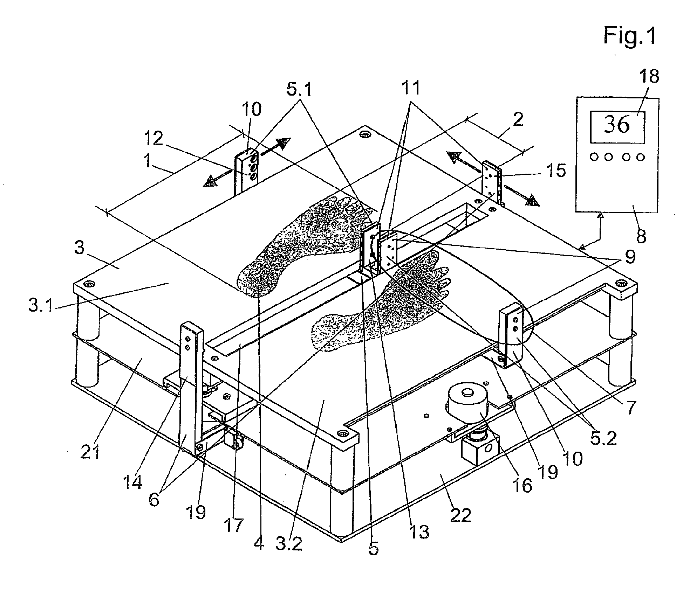

In Figur 1 ist ein Ausführungsbeispiel der erfindungsgemäßen Vorrichtung gezeigt. Zu vermessen sind menschliche Füße 4, deren Länge 1 und Breite 2 auf opto- elektronischem Wege bestimmt werden. Die Unterlage 3 besteht auf der dem Körper 4 zugewandten Seite aus einer Trittplatte 20, die zwei Teilflächen 3.1, 3.2 umfasst. Die Teilflächen 3.1, 3.2 sind durch den Spalt 17 voneinander getrennt, wobei innerhalb des Spaltes 17 die Detektoren 11 der beiden ersten Linearführungen 5.1 und 5.2, die jeweils zur Ermittlung der Länge der beiden Füße vorgesehen sind, angeordnet sind. Die beiden Linearführungen 5.1, 5.2 sind mechanisch miteinander gekoppelt und nur gemeinsam und synchron in Längsrichtung der zu messenden Füße 4 beweglich.

Die zweite Linearführung 6 zur Ermittlung der Breite 2 der Füße 4 ist in Querrichtung der zu vermessenden Füße 4 beweglich und entlang der gesamten Breite der Unterlage 3 verfahrbar.

Die beiden ersten Linearführungen 5.1, 5.2 sind im wesentlichen U-förmig ausgebildet, wobei der jeweilige Verbindungssteg 19 unterhalb der Trittplatte 20 verläuft.

Unterhalb der Trittplatte 20 ist eine Zwischenplatte 21 mit Abstand benachbart angeordnet, auf der der Antrieb für die beiden Linearführungen 5.1, 5.2 montiert ist. Der Antrieb erfolgt durch den Schrittschaltmotor 16, der mit der Zwischenplatte 21 verschraubt ist. Zwischen der Zwischenplatte 21 und der Grundplatte 22 ist der Verbindungssteg 19 der zweiten Linearführung 6 angeordnet. Die beiden ersten Linearführungen 5.1, 5.2 zur Ermittlung der Länge der Füße 4 sind orthogonal zur zweiten Linearführung 6 beweglich. Die beiden ersten Linearführungen 5.1, 5.2 sind in diesem Ausführungsbeispiel durch den gemeinsamen Schrittschaltmotor 16 angetrieben. Zum Antrieb der zweiten Linearführung 6 ist ein weiterer, hier nicht dargestellter Schrittschaltmotor vorgesehen.

Der Antrieb der Schrittschaltmotoren erfolgt durch die Auswertevorrichtung 8, die außerdem die Anzeige 18 aufweist, die in diesem Ausführungsbeispiel eine Schuhgröße anzeigt. Die Anzeige 18 ist in diesem Ausführungsbeispiel als Flüssigkristall-Matrixanzeige ausgebildet, die auch unter schlechten Lichtverhältnissen sicher ablesbar ist.

Die erste Linearführung 5.1, 5.2, und die zweite Linearführung 6 sind orthogonal zueinander angeordnet. Der opto-elektronische Tastkopf 7, der durch Lichtschranken 9 gebildet ist, ist signalleitend mit der Auswertevorrichtung 8 verbunden, wobei die Lichtschranken 9 jeweils einen Emitter 10 und einen Detektor 11 umfassen, Dadurch dass die Schenkel 12, 13, 14, 15 der Linearführungen 5, 5.1, 5.2, 6 auf einander gegenüberliegenden Seiten der Füße 4 angeordnet sind, werden die auf der Trittplatte 20 aufstehenden, zu vermessenden Füße in der Summe der Bewegungen der Tastköpfe 7 von diesen vollständig umfahren.

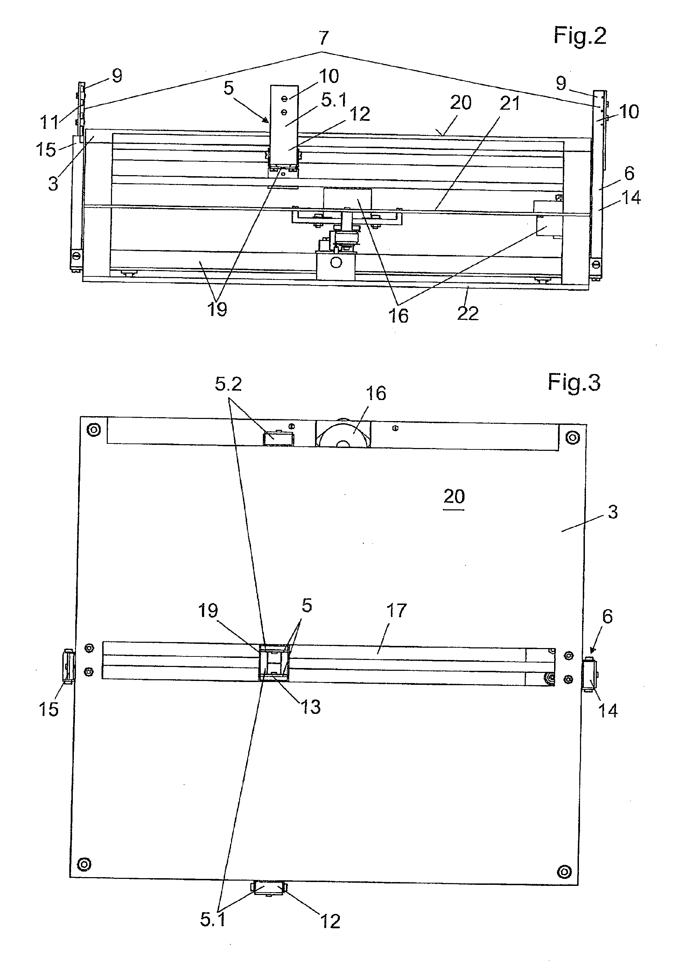

In Figur 2 ist eine Seitenansicht der Vorrichtung, in Figur 3 eine Draufsicht auf die Vorrichtung gezeigt.

## Patentansprüche

1. Vorrichtung zur opto-elektronischen Bestimmung der Länge (1) und der Breite (2) der beiden auf einer Unterlage (3) aufliegenden Füße (4) eines Menschen, wozu die Unterlage (3) eine Trittplatte (20) mit zwei Teilflächen (3.1, 3.2) umfasst, umfassend zwei erste Linearführungen (5.1, 5.2) zur Bestimmung der Länge (1) der beiden Füße (4), wobei die beiden ersten Linearführungen (5.1, 5.2) mechanisch miteinander gekoppelt und nurgemeinsam und synchron in Längsrichtung der beiden Teilflächen (3.1,3.2) beweglich sind und Schenkel (12,13) der Linearführungen (5.1, 5.2) auf einander gegenüberliegenden Seiten einer jeden Teilfläche (3.1, 3.2) angeordnet sind und jede der beiden ersten Linearführungen (5.1, 5.2) jeweils mindestens einen opto-elektronischen Tastkopf (7) aufweist, und eine zweite Linearführung (6) zur Bestimmung der Breite (2) der beiden Füße (4), die entlang der Querrichtung der Unterlage (3) beweglich ist, Schenkel (14, 15) auf einander gegenüberliegenden Seiten der Unterlage (3) und zumindest einen opto-elektronischen Tastkopf (7) aufweist, wobei die beiden ersten Linearführungen (5.1, 5.2) und die zweite Linearführung (6) orthogonal zueinander angeordnet sind und wobei die Tastköpfe (7) signalleitend mit einer Auswerteeinrichtung (8) zur Umrechnung und Anzeige des von den Tastköpfen (7) abgegebenen elektrischen Signals in die Länge (1) und die Breite (2) der beiden Füße (4) verbunden sind, die Tastköpfe (7) als Lichtschranken ausgebildet sind und zumindest einen Emitter (10) und einen dem Emitter (10) funktionstechnisch zugeordneten Detektor (11) in den beiden Schenkeln (12, 13; 14,15) einer jeden Linearführung (5.1, 5.2; 6) aufweisen, **dadurch gekennzeichnet, dass** die zwei ersten Linearführungen (5.1, 5.2) zur Ermittlung der Länge der beiden Füße (4) entlang der gesamten Länge der beiden Teilflächen (3.1, 3.2) verfahrbar sind, dass die zweite Linearführung (6) zur Ermittlung der Breite (2) der beiden Füße (4) in Querrichtung der zu vermessenden Füße (4) beweglich und entlang der gesamten Breite der Unterlage (3) verfahrbar ist, und die Messstrahlen der Emitter einer jeden Linearführung (5.1, 5.2, 6) moduliert und detektorseitig gefiltert sowie einer Schwellwertgewichtung unterzogen sind.

2. Vorrichtung nach Anspruch 1, **dadurch gekennzeichnet, dass** die Linearführungen (5.1, 5.2, 6) jeweils im wesentlichen U-förmig ausgebildet sind und die Unterlage (3) mit ihrem Verbindungssteg (19) untergreifen, dass die Schenkel (12, 13, 14, 15) der Linearführungen (5.1, 5.2, 6) auf einander gegenüberliegenden Seiten der Teilflächen (3.1, 3.2) angeordnet sind und dass einer der Schenkel (12, 14) einen Emitter (10) und einer der Schenkel (13, 15) einer jeden Linearführung (5.1, 5.2, 6) einen Detektor (11) aufweist.

3. Vorrichtung nach einem der Ansprüche 1 oder 2. **dadurch gekennzeichnet, dass** die Linearführungen (5.1, 5.2, 6) durch zumindest einen Schrittschaltmotor (16) antreibbar sind.

4. Vorrichtung nach einem der Ansprüche 1 bis 3, **dadurch gekennzeichnet, dass** die Auswertevorrichtung (8) durch ein elektronisches Modul gebildet ist.

5. Vorrichtung nach einem der Ansprüche 1 bis 4. **dadurch gekennzeichnet, dass** die Auswertevorrichtung (8) eine Klassifizierungseinrichtung zur Umformung des zumindest einen Messsignals in eine Größenklassifizierung umfasst.

## Claims

1. Device for optoelectronic determination of the length (1) and the width (2) of the two feet (4) of a human positioned on a support (3), for which purpose the support (3) comprises a foot board (20) with two portions (3.1, 3.2), comprising two first linear guides (5.1, 5.2) for determining the length (1) of the two feet (4), wherein the two first linear guides (5.1, 5.2) are mechanically coupled to one another and are mobile only together and synchronously in the longitudinal direction of the two portions (3.1, 3.2) and limbs (12, 13) of the linear guides (5.1, 5.2) are arranged on opposite sides of each portion (3.1, 3.2) and each one of the two first linear guides (5.1, 5.2) each has at least one optoelectronic probe (7), and a second linear guide (6) for determining the width (2) of the two feet (4), which second linear guide is mobile along the transverse direction of the support (3), has limbs (14, 15) on opposite sides of the support (3) and at least one optoelectronic probe (7), wherein the two first linear guides (5.1, 5.2) and the second linear guide (6) are arranged orthogonal to one another and wherein the probes (7) are connected in a signal-conducting manner to an evaluation apparatus (8) for converting and displaying the electrical signal emitted by the probes (7) as the length (1) and the width (2) of the two feet (4), the probes (7) are embodied as photoelectric sensors and comprise at least one emitter (10) and one detector (11), assigned in a function-technical manner to the emitter (10), in the two limbs (12, 13; 14, 15) of each linear guide (5.1, 5.2; 6), **characterized in that** the two first linear guides (5.1, 5.2) are displaceable along the whole length of the two portions (3.1, 3.2) for establishing the length of the two feet (4), **in that** the second linear guide (6) is movable in the transverse direction of the feet (4) to be measured and displaceable along the whole width of the support (3) for establishing the width (2) of the two feet (4), and the measurement beams of the emitters of each linear guide (5.1, 5.2, 6) are modulated and filtered on the detector side and subjected to a threshold weighting.

2. Device according to Claim 1, **characterized in that** the linear guides (5.1, 5.2, 6) each have a substantially U-shaped design and engage below the support (3) with the connection web (19) thereof, **in that** the limbs (12, 13, 14, 15) of the linear guides (5.1, 5.2, 6) are arranged on opposite sides of the portions (3.1, 3.2) and **in that** one of the limbs (12, 14) has an emitter (10) and one of the limbs (13, 15) of each linear guide (5.1, 5.2, 6) has a detector (11).

3. Device according to either of Claims 1 and 2, **characterized in that** the linear guides (5.1, 5.2, 6) are driveable by at least one stepper motor (16).

4. Device according to one of Claims 1 to 3, **characterized in that** the evaluation device (8) is formed by an electronic module.

5. Device according to one of Claims 1 to 4, **characterized in that** the evaluation device (8) comprises a classification apparatus for converting the at least one measurement signal into a size classification.

## Revendications

1. Dispositif opto-électronique permettant de déterminer la longueur (1) et/ou la largeur (2) des deux pieds (4) d'un être humain reposant sur un support (3), pour lequel le support (3) comprend un plateau repose-pieds (20) avec deux surfaces partagées (3.1,3.2), comprenant deux premiers guides linéaires (5.1,5.2) permettant de déterminer la longueur (1) des deux pieds (4), pour lequel les deux premiers guides linéaires (5.1,5.2) sont couplés mécaniquement l'un à l'autre et ne sont mobiles en commun et de façon synchrone que dans le sens longitudinal des deux surfaces partagées (3.1,3.2) et les branches (12, 13) des guides linéaires (5.1,5.2) sont disposées sur des côtés opposés l'un à l'autre d'une de chaque surface partagée (3.1,3.2) et chacun des deux premiers guides linéaires (5.1,5.2) comportent respectivement au moins une tête de palpage (7) opto-électronique et un deuxième guide linéaire (6) permettant de déterminer la largeur (2) des deux pieds (4) qui est mobile le long de la direction transversale du support (3), comporte les branches (14,15) sur les côtés opposés l'un à l'autre du support (3) et au moins une tête de palpage opto-électronique (7), pour lequel les deux premiers guides linéaires (5.1,5.2) et le deuxième guide linéaire (6) sont disposés de façon orthogonale l'un par rapport à l'autre et pour lequel les têtes de palpage (7) sont reliées en conduction de signaux avec un dispositif d'évaluation (8) pour convertir et afficher le signal électrique émis par les têtes de palpage (7) en longueur (1) et largeur (2) des deux pieds (4), les têtes de palpage (7) sont constituées comme des barrières lumineuses et comportent dans les deux branches (12,13;14,15) au moins un émetteur (10) et un détecteur (11) affecté techniquement et fonctionnellement à l'émetteur (10) d'un de chaque guide linéaire (5.1,5.2,6), **caractérisé en ce que** les deux premiers guides linéaires (5.1, 5.2) pour émettre la longueur des eux pieds (4) peuvent être déplacés le long de toute la longueur des deux surfaces partagées (3.1,3.2), **en ce que** le deuxième guide linéaire (6) pour émettre la largeur (2) des deux pieds (4) est mobile dans le sens transversal des pieds (4) à mesurer et peut être déplacé le long de toute la largeur du support (3) et les faisceaux de mesure des émetteurs de chaque guide linéaire (5.1,5.2,6) sont modulés et filtrés du côté détecteur, ainsi que soumis à une pondération de la valeur seuil.

2. Dispositif selon la revendication 1 **caractérisé en ce que** les guides linéaires (5.1,5.2,6) sont respectivement constitués pour l'essentiel en forme de "U" et enserrent le support (3) par en-dessous avec leur entretoise de liaison (19), **en ce que** les branches (12,13,14,15) des guides linéaires (5.1,5.2,6) sont disposées sur les côtés opposés l'un à l'autre des surfaces partagées (3.1,3.2) et **en ce qu'**une des branches (12,14) comporte un émetteur (10) et une des branches (13,15) d'un de chaque guide linéaire (5.1,5.2,6), un détecteur (11).

3. Dispositif selon l'une quelconque des revendications 1 ou 2 **caractérisé en ce que** les guides linéaires (5.1, 5.2,6) peuvent être entraînés par au moins un moteur pas à pas (16).

4. Dispositif selon l'une quelconque des revendications 1 à 3 **caractérisé en ce que** le dispositif d'évaluation (8) est constitué par un module électronique.

5. Dispositif selon l'une quelconque des revendications 1 à 4 **caractérisé en ce que** le dispositif d'évaluation (8) comprend un système de classification pour transformer au moins un signal de mesure en une classification de tailles.
